# EUROPÄISCHE PATENTSCHRIFT

(11) **EP 3 792 829 B1**
(45) Veröffentlichungstag und Bekanntmachung des Hinweises auf die Patenterteilung: **12.07.2023**
(21) Anmeldenummer: 19197580.4
(22) Anmeldetag: 16.09.2019
(51) Int. Cl.: G06K 19/077, F16B 15/00, F16B 15/08

(54) **NAGEL MIT RFID-TRANSPONDER**
NAIL WITH RFID TRANSPONDER
CLOU POURVU DE TRANSPONDEUR RFID

(43) Veröffentlichungstag der Anmeldung: 17.03.2021
(73) Patentinhaber: BeA GmbH, 22926 Ahrensburg (DE)
(72) Erfinder: THEBERATH, Martin, 22889 Tangstedt (DE); FISCHER-ZERNIN, Jakob, 20099 Hamburg (DE); BAUER, Joachim, 23843 Bad Oldesloe (DE)
(74) Vertreter: Cohausz & Florack

(56) Entgegenhaltungen:
- EP-A1- 3 510 858
- CN-B- 101 737 389
- US-A1- 2017 262 671

## Beschreibung

Nägel und Klammern zur Verarbeitung mit einem Eintreibwerkzeug dienen zumeist als Verbindungsmittel, etwa beim Anheften von Stoffen im Möbelbau oder der Montage von Holzwänden für Fertighäuser. Zur einfachen Verarbeitung können mehrere Klammern zu einem Klammerstab und mehrere Nägel zu einem Nagelstreifen verbunden und in dieser Form in ein Magazin eines Eintreibwerkzeugs eingesetzt werden.

Darüber hinaus werden spezielle Nägel und Klammern zur Kennzeichnung von Gegenständen eingesetzt. Bekannt ist beispielsweise eine Kennzeichnung von Paletten mit Klammern, die einen Farbcode und/oder eine besondere Prägung aufweisen. Ebenfalls bekannt ist eine maschinell lesbare Kennzeichnung von Gegenständen mithilfe von Nägeln, die einen RFID-Transponder aufweisen.

Aus der Druckschrift EP 2 816 508 A2 ist ein Nagel zum Eintreiben in Holz bekannt geworden, der eine flache Grundform aufweist und mit einem RFID-Transponder versehen ist. Mehrere dieser Nägel sollen zur Verarbeitung mit einem Eintreibwerkzeug magazinartig aufeinander gestapelt werden können. Das Eintreiben der Nägel erfordert einen hohen Kraftaufwand. Zudem besteht die Gefahr, dass der Nagel das Holz spaltet.

Aus der Druckschrift WO 2016/188918 A1 ist ein Nagelstreifen bekannt geworden, dessen Nägel jeweils mit einem RFID-Transponder versehen sind. Die Herstellung der Nagelstreifen erfolgt in einem Spritzgießverfahren, bei dem die RFID-Transponder in das Kunststoffmaterial der Nägel eingebettet werden. Die die Nägel bildenden Bereiche sind dann über Stege miteinander verbunden.

Aus dem Stand der Technik ist zudem die CN 101 737 389 B bekannt, diese offenbart einen Nagel mit einer Radiofrequenz-Kennzeichnungsfunktion.

Aus dem Stand der Technik ist ferner die EP 3510 858 A1 bekannt, diese offenbart einen Nagel, eine Verwendung eines Nagels und ein Verfahren zum Einbringen von Gegenständen in einen Körper.

Aus dem Stand der Technik ist zudem die US 2017/ 262 671 A1 bekannt, diese offenbart eine RFID-Tracking Befestigung.

Davon ausgehend ist es die Aufgabe der Erfindung, einen mit einem RFID-Transponder versehenen Nagel zur Verfügung zu stellen, der besonders robust ist und eine zuverlässige Kennzeichnung von Gegenständen ermöglicht, sowie ein Verfahren zur Herstellung eines solchen Nagels.

Diese Aufgabe wird gelöst durch den Nagel mit den Merkmalen des Anspruchs 1. Vorteilhafte Ausgestaltungen sind in den Unteransprüchen angegeben.

Der Nagel ist zur Verarbeitung mit einem Eintreibwerkzeug bestimmt und umfasst:
- einen RFID-Transponder,
- einen Grundkörper mit einem Aufnahmeraum, in dem der RFID-Transponder angeordnet ist, wobei
- der Grundkörper mehrteilig aufgebaut ist und ein Vorderteil und ein Hinterteil aufweist, die gemeinsam den Aufnahmeraum umschließen, miteinander verbunden sind und an einer Teilungsfläche aneinandergrenzen.

Das Eintreibwerkzeug kann ein Nagler sein, mit dem ein einzelner Nagel sehr schnell, in der Regel innerhalb weniger Millisekunden, eingetrieben werden kann, insbesondere ein Druckluftnagler, ein Gasnagler oder ein Nagler mit einem elektrischen Antrieb. Es kann jedoch ebenso gut ein sogenannter Pusher sein, insbesondere ein stationäres Gerät, mit dem die einzelnen Nägel in das jeweilige Werkstück eingepresst werden. Zur Verarbeitung mit einem solchen Eintreibwerkzeug können die Nägel einzeln in das Eintreibwerkzeug eingesetzt werden, es können jedoch auch mehrere Nägel zu einem Nagelstreifen verbunden sein, der einfach handhabbar ist und in ein Magazin oder eine sonstige Aufnahme des Eintreibwerkzeugs eingesetzt werden kann. Hierzu kann der Nagelstreifen insbesondere ein geradliniger Stab mit beispielsweise 10 bis 100 Nägeln sein. Einbezogen sind jedoch auch aufrollbare Nagelstreifen, häufig bezeichnet als Coils.

Der RFID-Transponder kann eine Sende- und Empfangsantenne und einen elektronischen Schaltkreis aufweisen. Der elektronische Schaltkreis kann einen nicht wiederbeschreibbaren Speicher (Festwertspeicher, read-only-memory/ROM) aufweisen, in dem eine individuelle, den Transponder eindeutig kennzeichnende Codierung gespeichert sein kann. Darüber hinaus kann der elektronische Schaltkreis einen wiederbeschreibbaren Speicher aufweisen, in dem ein Benutzer weitere Daten speichern kann. Bei dem RFID-Transponder kann es sich um eine passive Sende- und Empfangseinrichtung ohne eigene Energieversorgung handeln. Alternativ kann ein aktiver RFID-Transponder mit eigener Energieversorgung eingesetzt werden.

Dem Nagel ist ein RFID-Transponder zugeordnet, der beim Eintreiben des Nagels in ein Werkstück an dem Werkstück befestigt, insbesondere in das Werkstück eingebracht wird. Der RFID-Transponder befindet sich dabei in einem Aufnahmeraum, der von einem Grundkörper des Nagels gebildet ist.

Eine Besonderheit der Erfindung besteht darin, dass der Grundkörper mehrteilig aufgebaut ist und ein Vorderteil und ein Hinterteil aufweist, die gemeinsam den Aufnahmeraum umschließen, miteinander verbunden sind und an einer Teilungsfläche aneinandergrenzen. Der RFID-Transponder kann vor der Verbindung von Vorder- und Hinterteil in den Aufnahmeraum eingesetzt werden. Vorderteil und Hinterteil sind vorgefertigte Elemente mit einer vorgegebenen Geometrie. Darum ist auch die Geometrie und Anordnung des Aufnahmeraums innerhalb des Grundkörpers vorgegeben, anders als bei den eingangs zum Stand der Technik beschriebenen Nägeln, bei denen die RFID-Transponder mit einem Kunststoffmaterial umspritzt werden. Der Grundkörper kann aus genau zwei Teilen bestehen, nämlich aus dem Vorderteil und dem Hinterteil. Denkbar sind jedoch auch Ausführungen, bei denen Vorderteil und/oder Hinterteil ihrerseits aus mehreren Teilen bestehen, oder bei denen zusätzlich zu Vorder- und Hinterteil ein weiteres Teil vorhanden ist oder mehrere weitere Teile vorhanden sind.

Die Erfindung beruht auf der Erkenntnis, dass beim Eintreiben der relativ großen Nägel in ein Werkstück große Kräfte und Vibrationen auf den Nagel einwirken, was leicht zu Beschädigungen führen kann. Diese betreffen in vielen Fällen den RFID-Transponder, der nach dem Eintreibvorgang dann nicht mehr funktionsfähig ist. In diesem Fall ist die angestrebte Kennzeichnung des Werkstücks fehlgeschlagen. Hinzu kommt, dass viele Beschädigungen zunächst unerkannt bleiben, da sich der Nagel nach dem Eintreibvorgang teilweise oder vollständig innerhalb des Werkstücks befindet. Selbst wenn die Funktionsfähigkeit des RFID-Transponders durch eine Beschädigung des Nagels beim Eintreiben zunächst nicht beeinträchtigt worden ist, kann mit der Zeit Feuchtigkeit in den Nagel eindringen. Solche Folgeschäden führen schnell dazu, dass der RFID-Transponder nicht mehr zuverlässig funktioniert. Für eine zuverlässige und dauerhafte Kennzeichnung ist es daher sehr wichtig, dass der Nagel allen beim Eintreiben auf ihn einwirkenden Belastungen standhält. Hierzu trägt die Erfindung in mehrfacher Hinsicht bei.

Zum einen führt die Vorfertigung des Grundkörpers mit einem Aufnahmeraum dazu, dass der Nagel um den Aufnahmeraum herum eine definierte Wandstärke aufweist. Schwachstellen zum Beispiel infolge eines beim Umspritzen verrutschten RFID-Transponders werden dadurch ausgeschlossen. Die mehrteilige Ausbildung des Grundkörpers mit Vorder- und Hinterteil führt dazu, dass der Aufnahmeraum allseitig, insbesondere auch hinten, von dem Material des Grundkörpers umschlossen ist, und dass überall die vorgesehene Wandstärke erreicht wird.

Zum anderen stellt die zwischen Vorder- und Hinterteil ausgebildete Teilungsfläche, an der Vorder- und Hinterteil aneinandergrenzen, beim Eintreiben des Nagels eine definierte Krafteinleitung vom Hinterteil in das Vorderteil sicher. Spannungen und Verformungen im hinteren Bereich des Nagels, die durch die Einwirkung eines Eintreibstößels auftreten können, können sich innerhalb des Hinterteils abbauen, so dass eine lokale Überbeanspruchung des Grundkörpers im Bereich der Teilungsfläche vermieden wird.

Ein weiterer Vorteil der Erfindung ist die besonders einfache Fertigung der Nägel, bei der die RFID-Transponder einfach in den Aufnahmeraum eingesetzt und anschließend Vorder- und Hinterteil miteinander verbunden werden. Diese Schritte vermeiden thermische und mechanische Belastungen des empfindlichen RFID-Transponders.

Grundsätzlich kann der Nagel eine längliche Grundform aufweisen mit einem vorderen Ende und einem hinteren Ende. Am vorderen Ende kann eine Nagelspitze angeordnet sein, beispielsweise eine Diamant- oder Meißelspitze. Die Nagelspitze kann auch stumpf und/oder mehr oder weniger stark abgerundet ausgebildet sein. Der Nagel kann einen zylindrischen oder annähernd zylindrischen Schaftabschnitt aufweisen, dessen Querschnitt beispielsweise kreisförmig oder oval oder rechteckig/quadratisch, auch mit abgerundeten Ecken, sein kann. Der Nagel bzw. der Grundkörper des Nagels kann zum Beispiel aus einem Kunststoffmaterial bestehen, insbesondere aus ABS-Kunststoff (Acrylnitril-Butadien-Styrol) oder aus einem faserverstärkten Kunststoffmaterial.

Erfindungsgemäß weist das Vorderteil eine Nagelspitze und/oder das Hinterteil eine quer zu einer Längsachse des Nagels angeordnete Eintreibfläche auf. Die Eintreibfläche ist diejenige Fläche, auf die ein Eintreibstößel des Eintreibwerkzeugs einwirkt. Sie kann eine im Wesentlichen ebene Fläche sein, die quer zur Längsachse des Nagels angeordnet ist. Die Größe der Eintreibfläche kann etwa der größten Querschnittsfläche des Nagels entsprechen, zum Beispiel eine Größe im Bereich von 80 % bis 120 % oder im Bereich von 90 % bis 110 % der größten Querschnittsfläche des Nagels aufweisen. Sie kann aber auch größer oder kleiner sein. Alternativ können Nagelspitze und/oder Eintreibfläche an zusätzlichen Elementen des Grundkörpers ausgebildet sein.

In einer Ausgestaltung weist das Hinterteil an seinem hinteren Ende eine Materialstärke von mindestens 2 mm auf, betrachtet in Richtung einer Längsachse des Nagels. Diese Materialstärke kann über den gesamten Querschnitt des hinteren Endes erstreckt sein. Das Hinterteil kann somit an seinem hinteren Ende einen scheiben- oder plattenförmigen Abschnitt aufweisen. Die entgegen einer Eintreibrichtung weisende Außenfläche dieses Abschnitts kann die Eintreibfläche bilden. Die genannte Materialstärke führt zu einer hohen Stabilität des Nagels mit gleichmäßiger Krafteinleitung in dessen weiter vorn befindliche Abschnitte.

In einer Ausgestaltung verläuft die Teilungsfläche zumindest teilweise quer zu einer Längsachse des Nagels. Beispielsweise kann die gesamte Teilungsfläche quer verlaufen, oder ein Anteil im Bereich von 20 % bis 100 % ihrer Fläche, zum Beispiel von 50 % bis 100 %. Grundsätzlich kann die Teilungsfläche eine beliebige Geometrie aufweisen, zum Beispiel mit Schrägflächen und/oder Stufen. Quer zur Längsachse ausgerichtete Teilungsflächen oder Teilungsflächenabschnitte (insbesondere solche, deren Flächennormale orthogonal zu der Längsachse ausgerichtet ist) sind für die gewünschte Kraftübertragung vom Hinterteil auf das Vorderteil unter Umständen von Vorteil, insbesondere, wenn an der Teilungsfläche nur geringe Scherkräfte übertragen werden können.

Grundsätzlich kann die Teilungsfläche an einer beliebigen Längsposition des Nagels angeordnet sein, beispielsweise weit hinten, so dass das Hinterteil einer kurzen Kappe oder einem Stopfen entspricht, die bzw. der sich beispielweise über weniger als 20 % oder über weniger als 10 % der Gesamtlänge des Nagels erstreckt. Erfindungsgemäß ist die Teilungsfläche jedoch an einer Längsposition in den vorderen drei Vierteln des Nagels angeordnet. Sie kann auch in den vorderen zwei Dritteln, in der vorderen Hälfte oder im vorderen Drittel des Nagels angeordnet sein. Bei einer relativ weit vorn angeordneten Teilungsfläche muss nur ein geringerer Anteil der Eintreibkräfte an der Teilungsfläche auf das Vorderteil übertragen werden. Beschädigungen im Bereich der Teilungsfläche werden dadurch vermieden.

In einer Ausgestaltung schließt das Hinterteil im Bereich der Teilungsfläche bündig an das Vorderteil an oder bleibt hinter dessen Querschnitt zurück. Dies begünstigt ein gleichmäßiges Eindringen des Nagels in ein Werkstück.

In einer Ausgestaltung umgibt der Grundkörper den Aufnahmeraum im Querschnitt des Nagels symmetrisch. Insbesondere kann eine in Radialrichtung, also senkrecht zur Längsachse, gemessene Wandstärke spiegelsymmetrisch zu einer Mittellängsebene ausgebildet und/oder üben den gesamten Umfang gleich groß oder annähernd gleich groß sein. Eine an einer bestimmten Umfangsposition ausgebildete Schwachstelle wird dadurch verhindert, was einem Abknicken des Nagels beim Eintreiben vorbeugt.

In einer Ausgestaltung weist das Hinterteil einen Vorsprung oder umlaufenden Kragen auf, der in eine den Aufnahmeraum bildende Öffnung des Vorderteils eingesetzt ist, oder umgekehrt. Mit "oder umgekehrt" ist gemeint, dass das Vorderteil den Vorsprung oder umlaufenden Kragen aufweist, der in eine den Aufnahmeraum bildende Öffnung des Hinterteils eingesetzt ist. In beiden Fällen übt der Vorsprung bzw. Kragen beim Zusammensetzen von Vorder- und Hinterteil eine zentrierende Wirkung aus. Bei entsprechender Passung ergibt sich zugleich eine kraftschlüssige Fixierung, die für die Verbindung von Vorder- und Hinterteil ausreichend sein kann. In diesem Fall können die beiden Teile bei der Montage einfach zusammengesteckt werden.

In einer Ausgestaltung weist die Verbindung zwischen Hinterteil und Vorderteil eine Verdrehsicherung auf. Die Verdrehsicherung kann beispielsweise einen Vorsprung an einem der beiden Teile aufweisen, der in eine komplementär geformte Aussparung an dem anderen Teil eingreift. Dadurch wird bei der Montage eine gewünschte Drehstellung gewährleistet, die bei einer nicht-rotationssymmetrischen Ausbildung des Grundkörpers wichtig sein kann, etwa bei einem abgeflachten und/oder rechteckigen Querschnitt des Grundkörpers.

In einer Ausgestaltung sind das Vorderteil und das Hinterteil miteinander verklebt oder verschweißt. Auf diese Weise wird eine besonders stabile, dauerhafte und unter Umständen flüssigkeitsdichte Verbindung erzielt. Je nach Anwendung kann jedoch auch eine andere, zum Beispiel nur gesteckte Verbindung ausreichend sein.

In einer Ausgestaltung ist der Aufnahmeraum mit einem Füllmaterial verfüllt. Das Füllmaterial kann beispielsweise eine Vergussmasse, ein ausgehärteter Klebstoff, ein Elastomer, ein Gel oder ein Pulver aufweisen. Das Füllmaterial sorgt dafür, dass die Lage des RFID-Transponders in dem Aufnahmeraum fixiert wird. Beschädigungen des RFID-Transponders beim Eintreiben oder infolge sonstiger Erschütterungen oder Vibrationen können dadurch vermieden werden.

In einer Ausgestaltung sind eine Vielzahl von Nägeln miteinander zu einem Nagelstreifen verbunden. In dieser Form können die Nägel besonders einfach mit einem Eintreibwerkzeug verarbeitet werden. Die Verbindung ist bevorzugt formschlüssig und/oder kraftschlüssig, bevorzugt jedoch nicht stoffschlüssig.

Die oben angegebene Aufgabe wird ebenfalls gelöst durch das Verfahren mit den Merkmalen des Anspruchs 11. Das Verfahren dient zur Herstellung eines Nagels und umfasst die folgenden Schritte:
- Bereitstellen eines RFID-Transponders,
- Bereitstellen eines Vorderteils und eines Hinterteils eines Grundkörpers, der einen Aufnahmeraum aufweist,
- Einsetzen des RFID-Transponders in den Aufnahmeraum,
- Verbinden von Vorderteil und Hinterteil, so dass der RFID-Transponder in dem Aufnahmeraum angeordnet und der Aufnahmeraum von dem Vorderteil und dem Hinterteil umschlossen ist und Vorderteil und Hinterteil an einer Teilungsfläche aneinandergrenzen,
- wobei die Teilungsfläche an einer Längsposition in den vorderen drei Vierteln des Nagels angeordnet ist.

Zu den Merkmalen und Vorteilen des Verfahrens wird auf die vorstehenden Erläuterungen des Nagels verwiesen. Diese gelten entsprechend. Das Verfahren kann insbesondere zur Herstellung eines Nagels mit den Merkmalen eines der Ansprüche 1 bis 9 eingesetzt und entsprechend ausgestaltet werden. Insbesondere können Vorderteil und/oder Hinterteil die erläuterten Merkmale aufweisen und das Verbinden dieser Teile kann so ausgeführt werden, wie zu dem Nagel erläutert.

Nachfolgend werden die Erfindung und weitere Offenbarungen anhand von Figuren näher erläutert. Es zeigen:
- Fig. 1: einen Nagelstreifen in einer Ansicht von der Seite;
- Fig. 2: einen Nagel des Nagelstreifens aus Fig. 1 bei geschlossener und bei geöffneter Anordnung von Vorder- und Hinterteil in einer perspektivischen Ansicht;
- Fig. 3: die Anordnung aus Fig. 2 in einer perspektivischen Ansicht aus einem anderen Blickwinkel;
- Fig. 4: einen Nagel des Nagelstreifens aus Fig. 1 in fünf Ansichten aus unterschiedlichen Blickrichtungen und in einem Längsschnitt;
- Fig. 5: ein Hinterteil eines Grundkörpers eines Nagels aus Fig. 4 in fünf Ansichten aus unterschiedlichen Blickrichtungen;
- Fig. 6: zwei miteinander verbundene Nägel des Nagelstreifens aus Fig. 1 in einer Ansicht von der Seite und in einem Querschnitt;
- Fig. 7: einen Nagel eines anderen Nagelstreifens in fünf Ansichten aus unterschiedlichen Blickrichtungen und in einem Längsschnitt;
- Fig. 8: den Nagel aus Fig. 7 in fünf Ansichten aus unterschiedlichen Blickrichtungen bei geöffneter Anordnung von Vorder- und Hinterteil;
- Fig. 9: einen weiteren Nagelstreifen in einer Ansicht von der Seite;
- Fig. 10: den Nagelstreifen aus Fig. 9 in einer Ansicht von vorn;
- Fig. 11: einen Nagel des Nagelstreifens aus Fig. 9 bei geschlossener und bei geöffneter Anordnung von Vorder- und Hinterteil in einer perspektivischen Ansicht;
- Fig. 12: einen weiteren Nagelstreifen in einer Ansicht von der Seite;
- Fig. 13: den Nagelstreifen aus Fig. 12 in einer Ansicht von vorn;
- Fig. 14: einen Nagel des Nagelstreifens aus Fig. 12 bei geschlossener und bei geöffneter Anordnung von Vorder- und Hinterteil in einer perspektivischen Ansicht;
- Fig. 15: einen weiteren Nagelstreifen in einer Ansicht von der Seite;
- Fig. 16: den Nagelstreifen aus Fig. 15 in einer Ansicht von vorn;
- Fig. 17: einen Nagel des Nagelstreifens aus Fig. 15 bei geschlossener und bei geöffneter Anordnung von Vorder- und Hinterteil in einer perspektivischen Ansicht,
- Fig. 18: einen weiteren Nagelstreifen in drei unterschiedlichen Ansichten und einer Querschnittsdarstellung,
- Fig. 19: einen Nagel des Nagelstreifens aus Fig. 18 in vier unterschiedlichen Ansichten und einer Querschnittsdarstellung,
- Fig. 20: den Nagelstreifenverbinder des Nagelstreifens aus Fig. 18 in drei unterschiedlichen Ansichten.

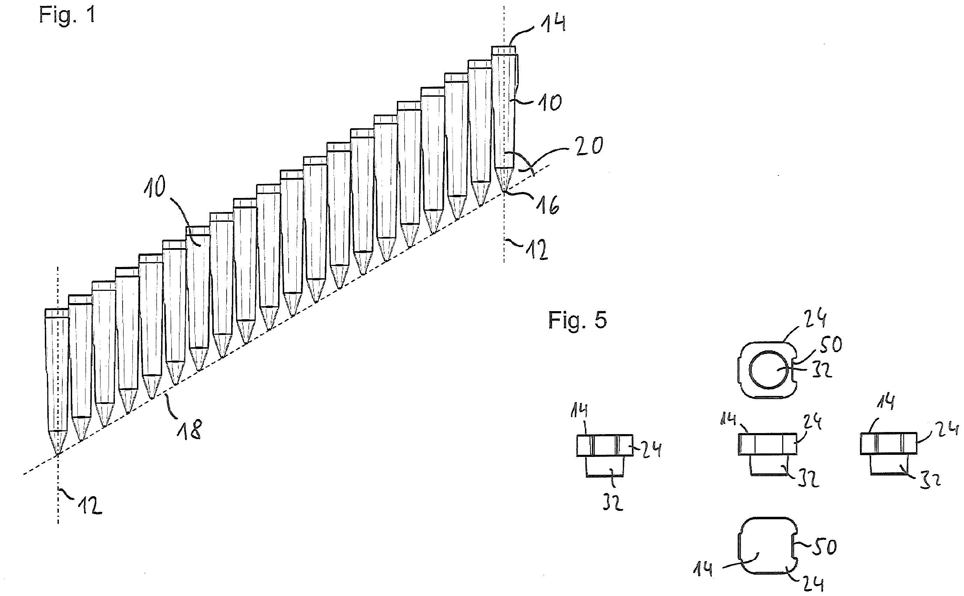

Der Nagelstreifen aus Fig. 1 umfasst zwanzig miteinander verbundene Nägel 10. Jeder Nagel 10 weist eine Längsachse 12, ein hinteres Ende, an dem eine Eintreibfläche 14 ausgebildet ist, und ein vorderes Ende auf, an dem eine Nagelspitze 16 ausgebildet ist. Die Nagelspitzen 16 der miteinander verbundenen Nägel 10 liegen auf einer Geraden 18, die in einem Winkel 20 von etwa 60° zu den Längsachsen 12 der Nägel 10 angeordnet ist.

Bei der Verarbeitung des Nagelstreifens in einem Eintreibwerkzeug wird der in der Fig. 1 ganz links befindliche Nagel 10 zuerst eingetrieben und dazu in Richtung seiner Längsachse 12 nach unten aus dem Formschluss herausgeschoben, d.h. in Richtung zu seiner Nagelspitze 16 hin bewegt und von dem benachbarten Nagel 10 getrennt.

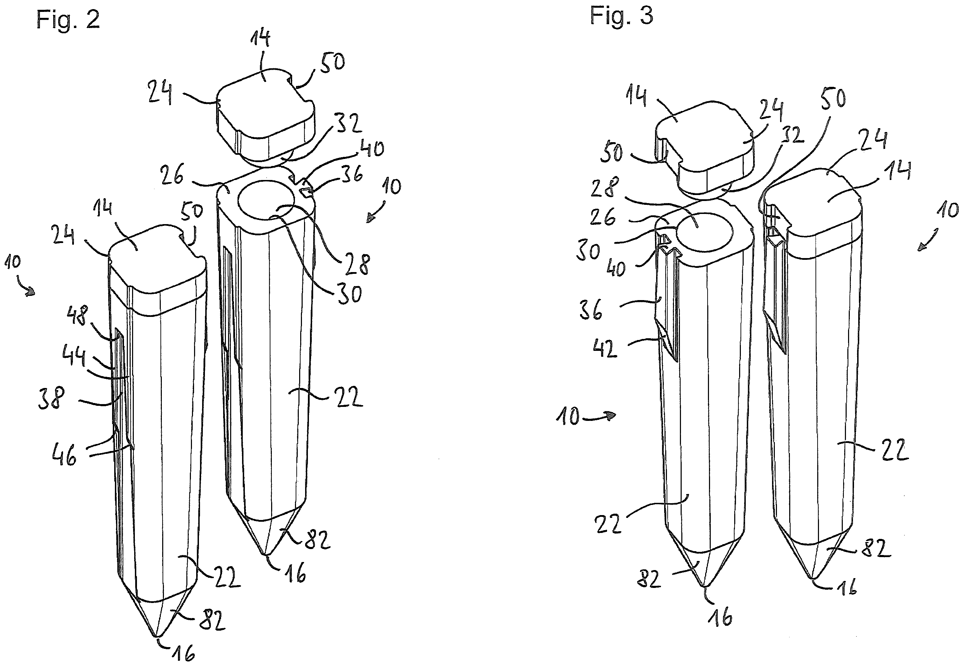

Fig. 2 zeigt Einzelheiten der einzelnen Nägel 10 des Nagelstreifens aus Fig. 1 deutlicher. Man erkennt, dass der Nagel 10 einen Grundkörper mit einem Vorderteil 22 und einem Hinterteil 24 aufweist. Die Nagelspitze 16 ist am vorderen Ende des Vorderteils 22, die Eintreibfläche 14 am hinteren Ende des Hinterteils 24 ausgebildet. Vorderteil 22 und Hinterteil 24 weisen mit Ausnahme des Bereichs nahe der Nagelspitze 16 im Wesentlichen den gleichen Querschnitt auf. Dieser ist quadratisch mit stark abgerundeten Ecken.

An einer Teilungsfläche 26, von der in der Fig. 2 nur ein quer zur nicht dargestellten Längsachse 12 ausgerichteter, ebener Abschnitt sichtbar ist, grenzen Vorderteil 22 und Hinterteil 24 aneinander an und sind miteinander verbunden. Der Querschnitt des Vorderteils 22 verjüngt sich mit zunehmendem Abstand von der Teilungsfläche 26 ganz leicht bis zu einem konischen bzw. kegelförmigen Abschnitt 82 nahe der Nagelspitze 16.

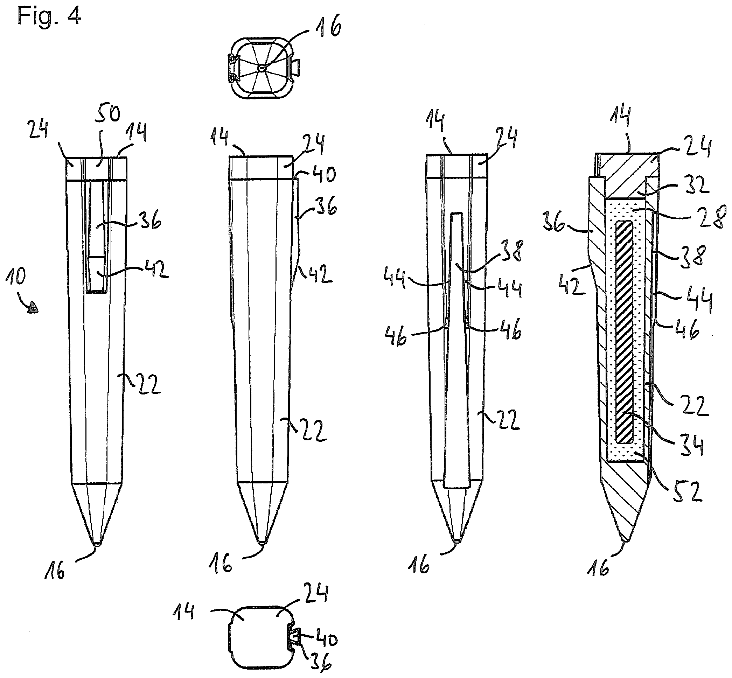

Ein kreiszylindrischer Aufnahmraum 28 befindet sich im Inneren des Grundkörpers. In der Fig. 2 sieht man eine kreisrunde Öffnung 30 im Vorderteil 22, die zu dem Aufnahmeraum 28 führt. Am Hinterteil 24 ist ein kreisscheibenförmiger Vorsprung 32 ausgebildet, der wie ein Stopfen in die Öffnung 30 eingesetzt wird. Bei der geschlossenen, in der Fig. 2 links gezeigten Anordnung ist der Aufnahmeraum 28 vollständig von dem Vorderteil 22 und dem Hinterteil 24 umschlossen. Innerhalb des Aufnahmeraums 28 ist ein RFID-Transponder 34 angeordnet, der nur schematisch in der Fig. 4 dargestellt ist.

Um benachbarte Nägel 10 miteinander zu verbinden, weist jeder Nagel zwei Verbindungselemente auf, nämlich an einer nach hinten (betrachtet in Richtung des Vorschubs des Nagelstreifens in einem Eintreibwerkzeug) weisenden Seite einen schwalbenschwanzförmigen Zapfen 36 und an der gegenüberliegenden, nach vorn weisenden Seite eine dazu komplementär geformte Nut 38. Zapfen 36 und Nut 38 verlaufen annähernd parallel zur Längsachse 12 und sind an das Vorderteil 22 des Grundkörpers angeformt, beispielsweise bei der Herstellung des Vorderteils 22 in einem Spritzgießverfahren.

Wie am besten in Fig. 3 erkennbar, erstreckt sich der Zapfen 36 vom hinteren Ende des Vorderteils/von der Teilungsfläche 26 an, wo er eine Anschlagfläche 40 aufweist, über etwa ein Drittel der Länge des Vorderteils 22. Zu seinem vorderen, zur Nagelspitze 16 weisenden Ende hin verjüngt sich der Zapfen 36, denn seine Höhe nimmt entlang einer Schrägfläche 42 bis auf null ab. Das der Nagelspitze 16 zugewandte Ende des Zapfens 36 steht somit nicht über den angrenzenden Querschnitt des Vorderteils 22 über.

Die besser in Fig. 2 erkennbare Nut 38 beginnt etwas unterhalb der Teilungsfläche 26, in einem Abstand vom hinteren Ende des Vorderteils 22, und erstreckt sich von dort zur Nagelspitze 16 hin ebenfalls über etwa ein Drittel der Länge des Vorderteils 22. Die Höhen der beiden die Nut 38 seitlich begrenzenden Stege 44 nehmen am vorderen Ende der Nut 38 ebenfalls bis auf null ab, und auch dort sind Schrägflächen 46 ausgebildet.

Das hintere Ende der Nut 38 bildet eine Anschlagfläche 48, die mit der am Zapfen 36 ausgebildeten Anschlagfläche 40 zusammenwirkt und beim Einschieben des Zapfens 36 in die Nut 38 die Bewegung stoppt, wenn die in Fig. 1 gezeigte Anordnung erreicht ist. Dabei sind Zapfen 36 und Nut 38 so aufeinander abgestimmt, dass sich zusätzlich zu dem Formschluss ein klemmender Halt ergibt, der eine problemlose Handhabung des Nagelstreifens ermöglicht.

Um das Einschieben des Zapfens 36 in die Nut 38 bei geschlossenem Grundkörper zu ermöglichen, weist das Hinterteil 24, das im Übrigen die Form einer kleinen Kappe aufweist, an der zu dem Zapfen 36 hin orientierten Seite eine Aussparung 50 auf, über deren Boden der Zapfen 36 seitlich übersteht.

Figur 4 zeigt einen Nagel 10 des Nagelstreifens aus Fig. 1 ganz oben in einer Ansicht auf die Nagelspitze 16, ganz unten in einer Ansicht auf die Eintreibfläche 14, ganz links in einer Ansicht auf die hintere Seite mit dem Zapfen 36, rechts davon in einer seitlichen Ansicht, nochmals rechts davon in einer Ansicht auf die vordere Seite mit der Nut 38. Ganz rechts ist ein Längsschnitt dargestellt.

In der Schnittebene sind sowohl der Zapfen 36 als auch die Nut 38 gut zu erkennen, ebenso der Vorsprung 32 an dem Hinterteil 24 und der Aufnahmeraum 28 mit dem darin angeordneten RFID-Transponder 34, der von einem pulverförmigen Füllmaterial 52 umgeben ist. In dem Längsschnitt ist außerdem gut zu erkennen, dass das Hinterteil 24 einen die Eintreibfläche 14 bildenden, scheibenförmigen Abschnitt aufweist, der sich mit einer Materialstärke von mindestens 2 mm über den gesamten Querschnitt des Hinterteils 24 erstreckt. Die bereits im Zusammenhang mit den Figuren 1 bis 3 erläuterten Elemente sind mit den bereits dort eingeführten Bezugszeichen versehen. Hierzu wird auf die vorstehenden Erläuterungen verwiesen.

In der Fig. 5 ist das Hinterteil 24 eines Grundkörpers allein dargestellt, ebenfalls in fünf Ansichten, deren Anordnung derjenigen aus Fig. 4 entspricht. Man erkennt, dass der Vorsprung 32 für einen festen Sitz in der Öffnung 30 leicht konisch geformt ist.

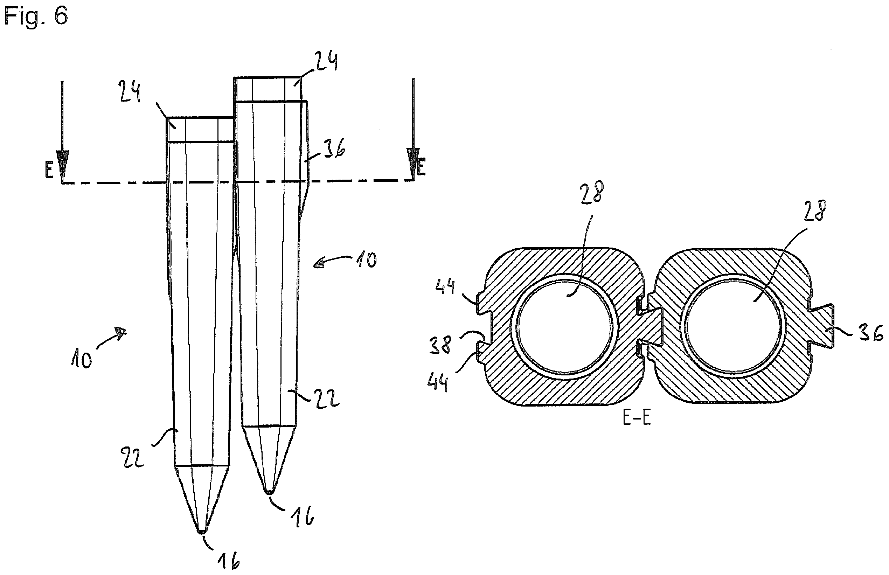

Figur 6 verdeutlicht in der Ansicht links die Lage der mit E-E bezeichneten Schnittebene. Der Schnitt ist im rechten Teil der Figur dargestellt. In der Ansicht ist die in Richtung der nicht dargestellten Längsachsen 12 versetzte Anordnung der beiden benachbarten Nägel 10, die sich aus dem erläuterten Zusammenwirken der Anschlagflächen 40, 48 ergibt, gut erkennbar. In der Schnittdarstellung wird die formschlüssige Verbindung zwischen dem im Querschnitt trapezförmigen Zapfen 36 und der Nut 38 deutlich. Man erkennt auch, dass diese Verbindung keine Verdrehung um eine Drehachse zulässt, die parallel zur den Längsachsen 12 ausgerichtet ist. Sie fixiert darum die Anordnung der Nägel 10 in Form des geraden Nagelstreifens.

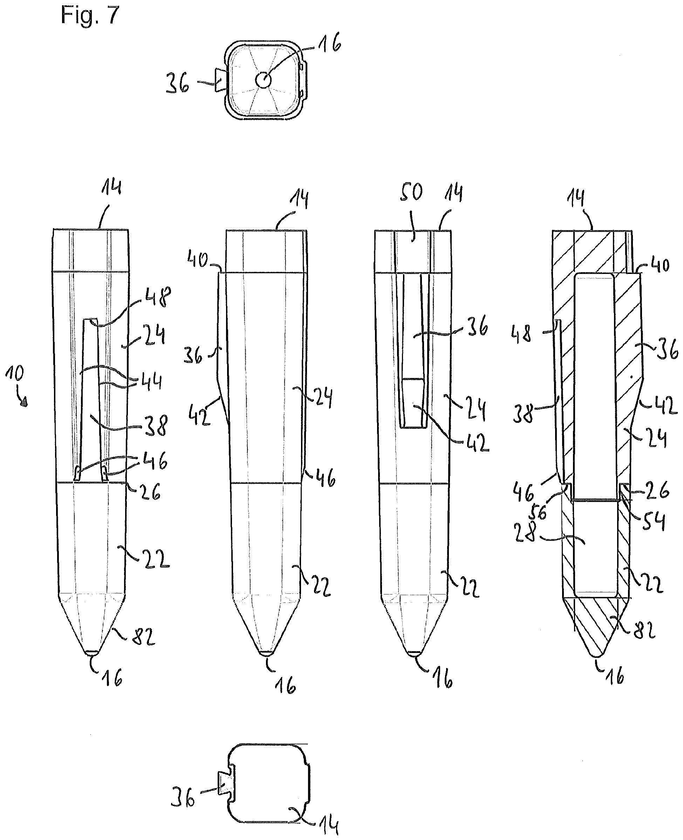

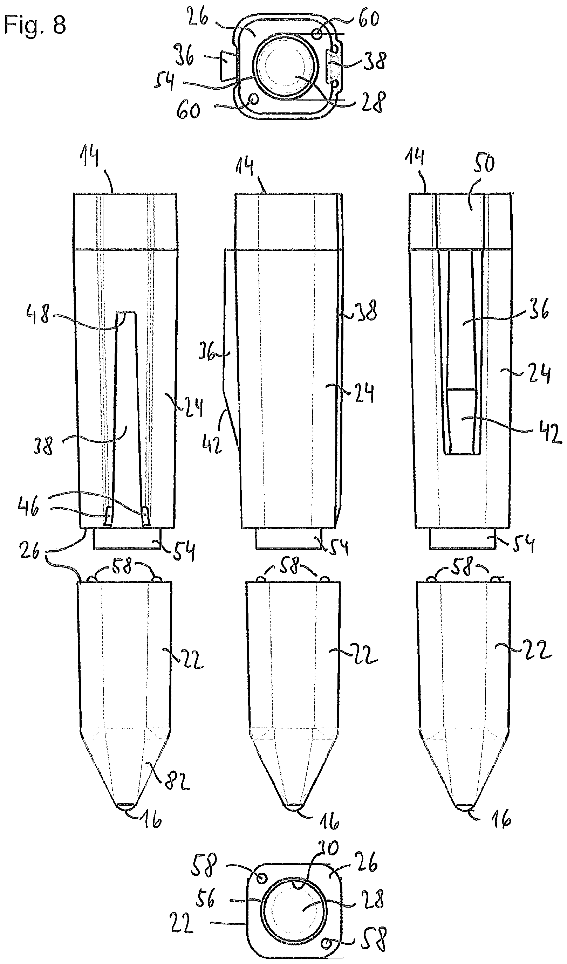

Die Figuren 7 und 8 zeigen einen anderen Nagel 10, der eine Verbindung zu einem Nagelstreifen ähnlich demjenigen aus Fig. 1 erlaubt. Die sechs von der Fig. 7 umfassten Ansichten entsprechen bis auf ihre relative Anordnung den zur Fig. 4 erläuterten. Die fünf von Fig. 8 umfassten Ansichten entsprechen den Ansichten aus Fig. 7, wobei Vorderteil 22 und Hinterteil 24 in einem Abstand voneinander gezeichnet sind und die kleinen, ganz oben und unten dargestellten Ansichten jetzt nicht den gesamten Nagel 10, sondern nur das Hinterteil 24 (oben) bzw. nur das Vorderteil 22 (unten) zeigen. Der wesentliche Unterschied des Nagels 10 der Figuren 7 und 8 von demjenigen aus den Figuren 1 bis 6 besteht in der abweichenden Zweiteilung des Grundkörpers in Vorderteil 22 und Hinterteil 24, bei der die Teilungsfläche 26 weiter vom angeordnet ist, so dass sich das Vorderteil 22 nunmehr über etwa ein Drittel der Gesamtlänge des Nagels 10 und das Hinterteil 24 über etwa zwei Drittel davon erstreckt. Die Anordnung der Verbindungselemente Zapfen 36 und Nut 38 ist bezogen auf den gesamten Nagel 10 nahezu unverändert, sie sind jetzt jedoch am Hinterteil 24 ausgebildet. Statt des Vorsprungs 32 am Hinterteil 24 weist dieses nun einen umlaufenden Kragen 54 auf, der in die jetzt eine Stufe 56 aufweisende Öffnung 30 des Vorderteils 22 eingepasst ist.

Eine weitere Besonderheit besteht in einer zwischen Vorderteil 22 und Hinterteil 24 wirkenden Verdrehsicherung, die zwei kleine Vorsprünge 58 am Vorderteil 22 und zwei korrespondierende Aussparungen 60 am Hinterteil 24 aufweist. Die übrigen Elemente sind weitgehend unverändert und mit den gleichen Bezugszeichen versehen wie in den Figuren 1 bis 6. Die vorstehenden Erläuterungen dazu gelten entsprechend.

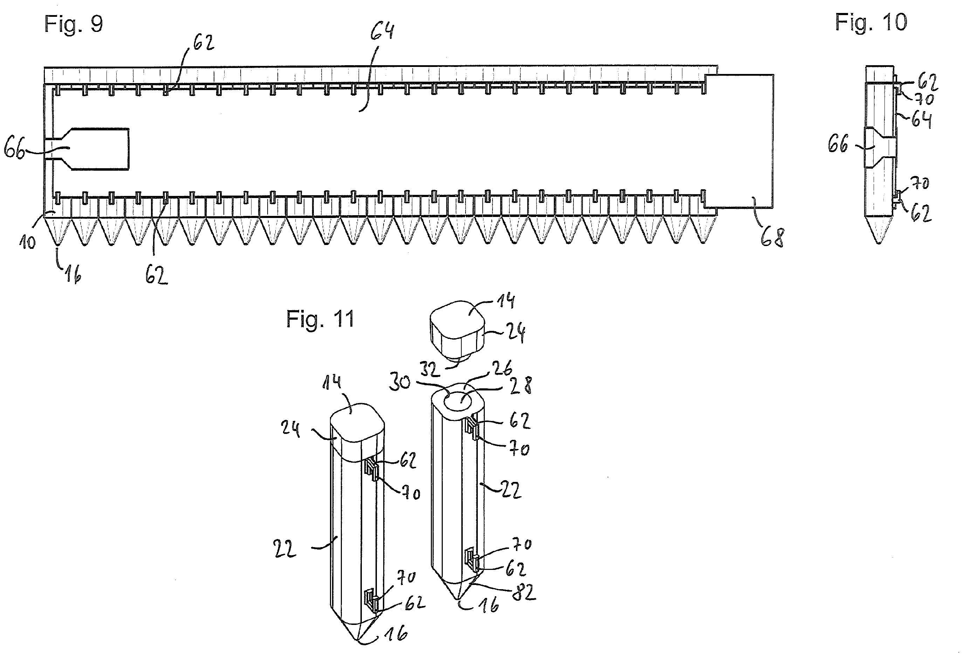

Das in den Figuren 9 bis 11 dargestellte Beispiel betrifft einen Nagelstreifen, bei dem an den einzelnen Nägeln 10 ausgebildete Verbindungselemente die Nägel mittelbar mithilfe eines von den Nägeln 10 verschiedenen Verbindungsmittels zu dem Nagelstreifen verbinden. Die Verbindungselemente der Nägel sind kleine, einander paarweise gegenüberliegende Haken 62. Als weiteres Verbindungsmittel dient ein über die gesamte Länge des Nagelstreifens erstreckter, fester Papierstreifen 64, der an seinem vorderen Ende mit einem Klebestreifen 66 an einem vordersten Nagel 10 befestigt und an seinem hinteren Ende mit einem Griffabschnitt 68 versehen ist. Die Breite des Papierstreifens 64 ist so bemessen, dass der Papierstreifen 64 den zwischen zwei Haken 62 eines Nagels vorhandenen Freiraum im Wesentlichen ausfüllt. Zwei einander zugewandte Nasen 70 der Haken 62 hintergreifen den Papierstreifen 64 und fixieren so den Nagel an dem Papierstreifen 64. Am seinem hinteren Ende weist der Papierstreifen 64 eine Verbreiterung auf, die ein Verrutschen des hintersten Nagels 10 nach hinten verhindert und zugleich den Griffabschnitt 68 bildet.

Der Nagelstreifen kann in der in den Figuren 9 und 10 gezeigten Anordnung in ein Eintreibwerkzeug eingesetzt werden. Die Nägel können dann durch das Eintreibwerkzeug, insbesondere durch ein Magazin davon, in der aneinandergereihten Anordnung gehalten werden, so dass der Papierstreifen 64 durch Ziehen an dem Griffabschnitt 68 entfernt werden kann. Dass die Haken 62 beim Eintreiben der Nägel in ein Werkstück möglicherweise abbrechen, stellt in vielen Fällen kein Problem dar, weil die Stabilität und Integrität der Nägel 10 dadurch nicht beeinträchtigt wird.

Figur 11 lässt weitere Einzelheiten der Nägel 10 erkennen, insbesondere, dass diese wiederum aus einem Vorderteil 22 und einem Hinterteil 24 zusammengefügt sind. Zur Geometrie dieser Teile gelten die Erläuterungen zu den Figuren 1 bis 6 entsprechend, sofern sich diese nicht auf die dort anders ausgeführten Verbindungselemente beziehen.

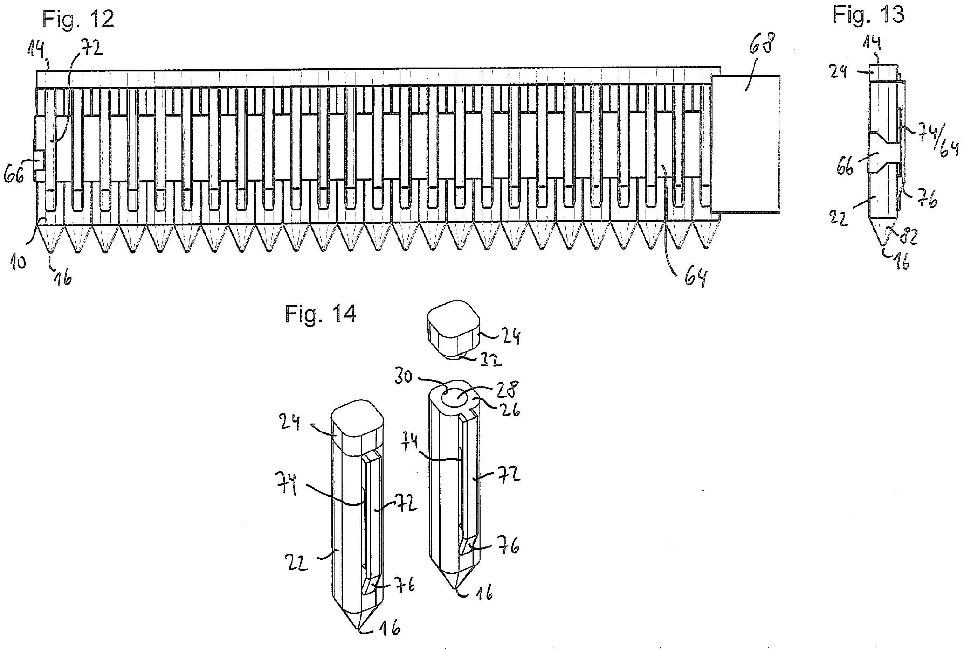

Das in den Figuren 12 bis 14 dargestellte Beispiel betrifft einen Nagelstreifen, der ähnlich wie derjenige aus den Figuren 9 bis 11 einen Papierstreifen 64 als weiteres Verbindungsmittel aufweist. Statt der beiden Haken 62 weisen die Nägel 10 jedoch einen bügelförmigen Steg 72 auf, der eine Durchgangsöffnung 74 bildet, durch die der Papierstreifen 64 hindurchgeführt ist. Die Nägel 10 können auf den Papierstreifen 64 aufgefädelt werden. Am vorderen Ende des Stegs 72 ist eine Schrägfläche 76 ausgebildet.

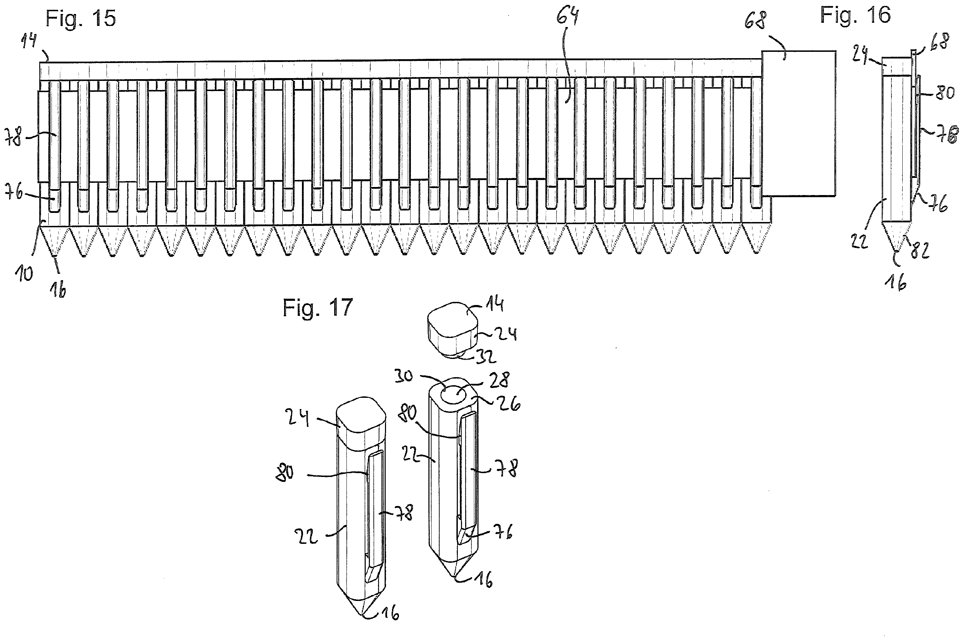

Das in den Figuren 15 bis 17 dargestellte Beispiel zeigt einen Nagelstreifen, der ebenfalls einen Papierstreifen 64 als weiteres Verbindungsmittel aufweist. Im Unterschied zu den Figuren 12 bis 14 sind als Verbindungselemente der Nägel 10 clipförmige Stege 78 vorgesehen. Das hintere Ende eines Stegs 78 ist mit dem Vorderteil 22 des zugehörigen Grundkörpers verbunden. Es weist außerdem eine Schrägfläche 76 auf. Das hintere Ende des Stegs 78 ist frei; es weist eine Rastnase 80 auf. Dadurch können die Nägel 10 auf den Papierstreifen 64 aufgeschoben werden, ähnlich wie ein Kugelschreiber mit einem Halteclip. Beim Eintreiben eines Nagels 10 kann dieser gegebenenfalls ohne Zerstörung des Papierstreifens 64 nach unten von dem Papierstreifen 64 heruntergeschoben werden, sofern der Papierstreifen 64 nicht schon zuvor entfernt wurde, insbesondere nach dem Einsetzen des Nagelstreifens in ein Magazin, sodass sich danach nur noch einzelne Nägel im Magazin befinden.

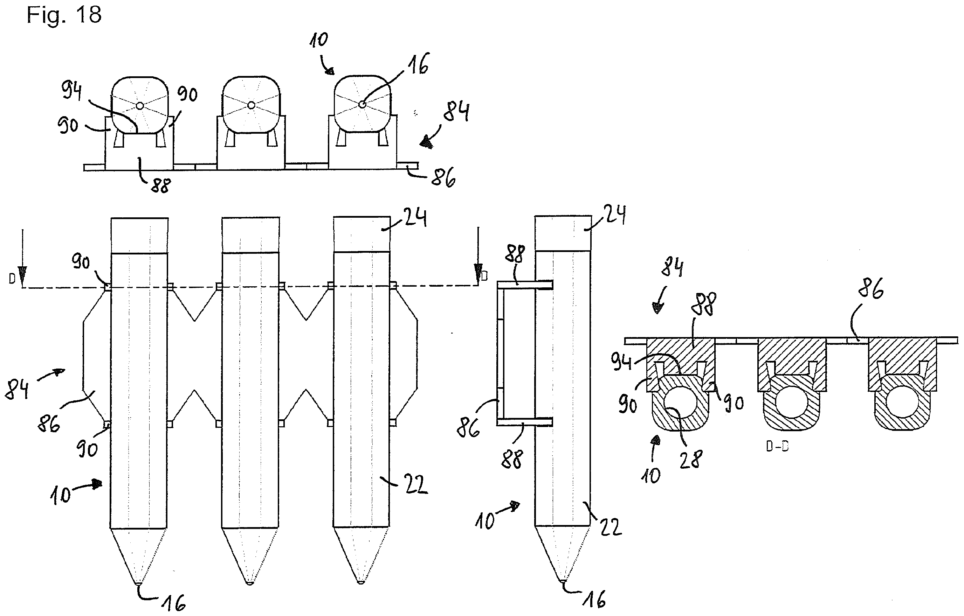

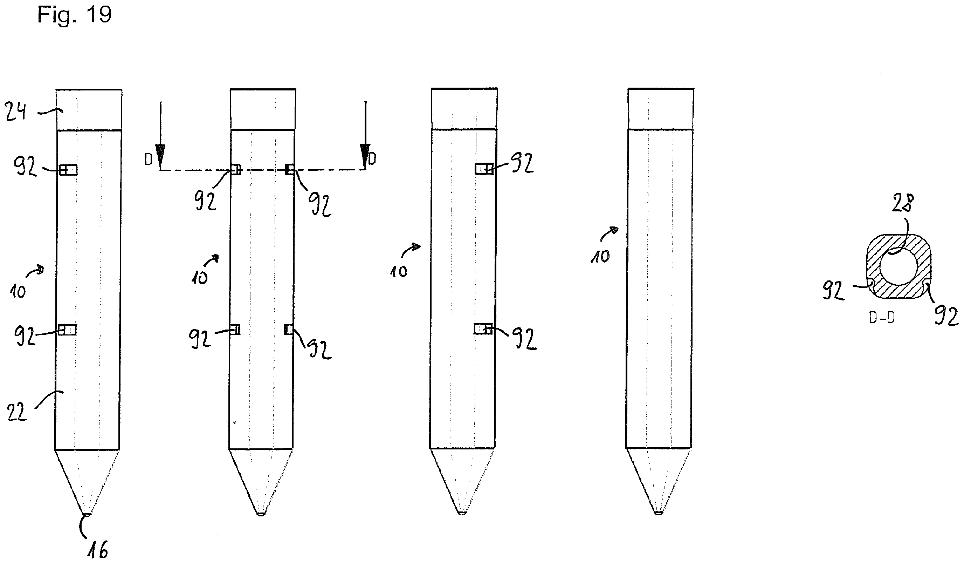

Fig. 18 zeigt einen Nagelstreifen, bei dem als Nagelstreifenverbinder ein Kunststoffstreifen 84 zum Einsatz kommt. In der Ansicht oben ist der Blick auf die Nagelspitzen 16 gerichtet, darunter fällt er von der Seite auf den Nagelstreifen. Rechts davon befindet sich eine Ansicht auf den Nagelstreifen von vorn, ganz rechts eine Querschnittsdarstellung entlang der mit D-D bezeichnete Ebene. Der Kunststoffstreifen 84 weist ein Kunststoffband 86 auf, das an einer Seite des Nagelstreifens in gleichmäßigem Abstand von den Nägeln 10 angeordnet ist. Ausgehend von den Längskanten des Kunststoffbands 86 erstrecken sich in regelmäßigen Abständen paarweise einander gegenüberliegende Halteelemente 88, die etwa rechtwinklig zur Ebene des Kunststoffbands 86 ausgerichtet sind. Jedes Halteelement 88 hat zwei einander gegenüberliegend angeordnete Arme 90, die jeweils in eine Aussparung 92 (siehe Fig. 19) eines Nagels 10 eingreifen. Zwischen jeweils zwei gegenüberliegend angeordneten Armen 90 haben die Halteelemente 88 jeweils eine Stirnkante 94, an der der von den Armen 90 gehaltene Nagel 10 anliegt.

Die Nägel 10 weisen ähnlich wie in den übrigen Beispielen jeweils ein Vorderteil 22 und ein Hinterteil 24 auf, die miteinander verbunden sind, sowie einen Aufnahmeraum 28.

Einzelheiten der Nägel 10 sind besser in Fig. 19 erkennbar, die einen der Nägel 10 in vier unterschiedlichen Ansichten und ganz rechts in einem Querschnitt zeigt. Die Nägel 10 weisen eine zylindrische Grundform mit abgerundet-quadratischem Querschnitt auf. Jeder Nagel 10 hat vier Aussparungen 92, die an zwei dem Nagelstreifenverbinder zugewandten Längskanten des Nagels 10 ausgebildet sind. Wie in der Querschnittsdarstellung erkennbar, weisen die Aussparungen 92 jeweils einen Hinterschnitt auf, so dass die Arme 90 in die Aussparungen 92 einrasten oder einschnappen können.

Zwei einander gegenüberliegende Aussparungen 92 sind in der gekennzeichneten Querschnittsebene D-D angeordnet, die sich im hinteren Drittel des Nagels 10 befindet. Zwei weitere, einander gegenüberliegende Aussparungen 92 befinden sich weiter vorn, in der vorderen Hälfte des Nagels 10. Der Abstand zwischen den beiden Paaren von Aussparungen 92 entspricht etwa der Breite des Kunststoffbands 86. Sämtliche Aussparungen 92 sind im Vorderteil 22 des Nagels ausgebildet.

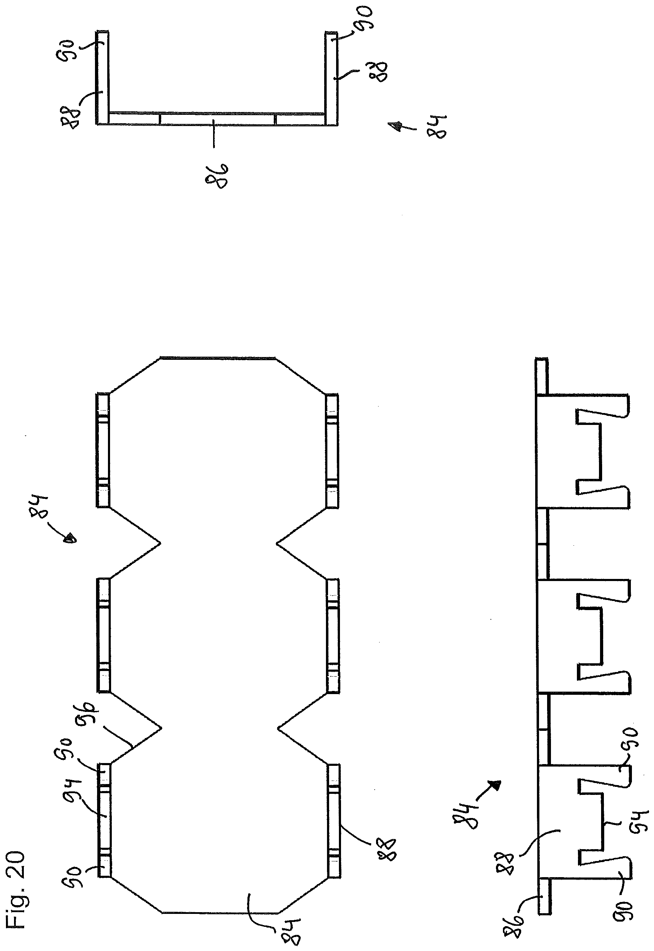

Fig. 20 zeigt besonders deutlich die bereits erläuterte Form des Kunststoffstreifens 84, der in Alleinstellung in drei Ansichten gezeigt ist, nämlich oben von der den Nägeln 10 zugewandten Seite aus betrachtet, unten von der Oberseite des Nagelstreifens, an der sich die Hinterteile 24 befinden, aus betrachtet, rechts in einer Ansicht von vorn. Gut erkennbar sind die mit Rastnasen versehenen bzw. Rastnasen bildenden Arme 90 und die jeweils dazwischen angeordneten Stirnkanten 94 der Halteelemente 88.

Das Kunststoffband 86 weist jeweils zwischen zwei Halteelementen 88 einen V-förmigen Einschnitt 96 auf, und zwar auf beiden Seiten. Dadurch kann ein Abschnitt des Kunststoffstreifens 84, der sich bei der Verarbeitung des Nagelstreifens nach und nach aus einem Magazin eines Eintreibgeräts herausschiebt, einfach abgetrennt werden.

### Liste der Bezugszeichen

- 10: Nagel
- 12: Längsachse
- 14: Eintreibfläche
- 16: Nagelspitze
- 18: Gerade
- 20: Winkel
- 22: Vorderteil
- 24: Hinterteil
- 26: Teilungsfläche
- 28: Aufnahmeraum
- 30: Öffnung
- 32: Vorsprung
- 34: RFID-Transponder
- 36: Zapfen
- 38: Nut
- 40: Anschlagfläche
- 42: Schrägfläche
- 44: Steg
- 46: Schrägfläche
- 48: Anschlagfläche
- 50: Aussparung
- 52: Füllmaterial
- 54: Kragen
- 56: Stufe
- 58: Vorsprung
- 60: Aussparung
- 62: Haken
- 64: Papierstreifen
- 66: Klebstoff
- 68: Griffabschnitt
- 70: Nase
- 72: bügelförmiger Steg
- 74: Durchgangsöffnung
- 76: Schrägfläche
- 78: clipförmiger Steg
- 80: Rastnase
- 82: konischer/kegelförmiger Abschnitt
- 84: Kunststoffstreifen
- 86: Kunststoffband
- 88: Halteelement
- 90: Arm
- 92: Aussparung
- 94: Stirnkante
- 96: Einschnitt

## Patentansprüche

1. Nagel (10), der zur Verarbeitung mit einem Eintreibwerkzeug bestimmt ist und folgendes umfasst:
- einen RFID-Transponder (34),
- einen Grundkörper mit einem Aufnahmeraum (28), in dem der RFID-Transponder (34) angeordnet ist, wobei
- der Grundkörper mehrteilig aufgebaut ist und ein Vorderteil (22) und ein Hinterteil (24) aufweist, die gemeinsam den Aufnahmeraum (28) umschließen, miteinander verbunden sind und an einer Teilungsfläche (26) aneinandergrenzen,
- wobei das Vorderteil (22) eine Nagelspitze (16) aufweist und/oder das Hinterteil (24) eine quer zu einer Längsachse (12) des Nagels (10) angeordnete Eintreibfläche (14) aufweist,
**dadurch gekennzeichnet, dass**
- die Teilungsfläche (26) an einer Längsposition in den vorderen drei Vierteln des Nagels (10) angeordnet ist.

2. Nagel (10) nach Anspruch 1, **dadurch gekennzeichnet, dass** das Hinterteil (24) an seinem hinteren Ende eine Materialstärke von mindestens 2 mm aufweist, betrachtet in Richtung einer Längsachse (12) des Nagels (10).

3. Nagel (10) nach Anspruch 1 oder Anspruch 2, **dadurch gekennzeichnet, dass** die Teilungsfläche (26) zumindest teilweise quer zu einer Längsachse (12) des Nagels (10) verläuft.

4. Nagel (10) nach einem der Ansprüche 1 bis 3, **dadurch gekennzeichnet, dass** das Hinterteil (24) im Bereich der Teilungsfläche (26) bündig an das Vorderteil (22) anschließt oder hinter dessen Querschnitt zurückbleibt.

5. Nagel (10) nach einem der Ansprüche 1 bis 4, **dadurch gekennzeichnet, dass** der Grundkörper den Aufnahmeraum (28) im Querschnitt des Nagels (10) symmetrisch umgibt.

6. Nagel (10) nach einem der Ansprüche 1 bis 5, **dadurch gekennzeichnet, dass** das Hinterteil (24) einen Vorsprung (32) oder umlaufenden Kragen (54) aufweist, der in eine den Aufnahmeraum (28) bildende Öffnung (30) des Vorderteils (22) eingesetzt ist, oder umgekehrt.

7. Nagel (10) nach einem der Ansprüche 1 bis 6, **dadurch gekennzeichnet, dass** die Verbindung zwischen Hinterteil (24) und Vorderteil (22) eine Verdrehsicherung aufweist.

8. Nagel (10) nach einem der Ansprüche 1 bis 7, **dadurch gekennzeichnet, dass** das Vorderteil (22) und das Hinterteil (24) miteinander verklebt oder verschweißt sind.

9. Nagel (10) nach einem der Ansprüche 1 bis 8, **dadurch gekennzeichnet, dass** der Aufnahmeraum (28) mit einem Füllmaterial (52) verfüllt ist.

10. Nagelstreifen mit einer Vielzahl von miteinander verbundenen Nägeln (10) nach einem der Ansprüche 1 bis 9.

11. Verfahren zur Herstellung eines Nagels (10) mit den folgenden Schritten:
- Bereitstellen eines RFID-Transponders (34),
- Bereitstellen eines Vorderteils (22) und eines Hinterteils (24) eines Grundkörpers, der einen Aufnahmeraum (28) aufweist, wobei das Vorderteil (22) eine Nagelspitze (16) aufweist und/oder das Hinterteil (24) eine quer zu einer Längsachse (12) des Nagels (10) angeordnete Eintreibfläche (14) aufweist,
- Einsetzen des RFID-Transponders (34) in den Aufnahmeraum (28),
- Verbinden von Vorderteil (22) und Hinterteil (24), so dass der RFID-Transponder (34) in dem Aufnahmeraum (28) angeordnet und der Aufnahmeraum (28) von dem Vorderteil (22) und dem Hinterteil (24) umschlossen ist und Vorderteil (22) und Hinterteil (24) an einer Teilungsfläche (26) aneinandergrenzen, wobei die Teilungsfläche (26) an einer Längsposition in den vorderen drei Vierteln des Nagels (10) angeordnet ist.

## Claims

1. Nail (10) intended to be processed with a driving tool and comprising the following:
- an RFID transponder (34),
- a main body having a receiving space (28) in which the RFID transponder (34) is arranged, wherein
- the main body is constructed in multiple parts and has a front part (22) and a rear part (24), which together enclose the receiving space (28), are connected to one another and adjoin one another on a partition surface (26),
- wherein the front part (22) has a nail tip (16) and/or the rear part (24) has a drive-in surface (14) arranged transverse to a longitudinal axis (12) of the nail (10), **characterised in that**
- the partition surface (26) is arranged in a longitudinal position in the front three quarters of the nail (10).

2. Nail (10) according to claim 1, **characterised in that** the rear part (24) has a material thickness of at least 2 mm at its rear end, viewed in the direction of a longitudinal axis (12) of the nail (10).

3. Nail (10) according to claim 1 or claim 2, **characterised in that** the partition surface (26) runs at least partially transverse to a longitudinal axis (12) of the nail (10).

4. Nail (10) according to any one of claims 1 to 3, **characterised in that** the rear part (24) is flush with the front part (22) in the region of the partition surface (26) or remains behind its cross-section.

5. Nail (10) according to any one of claims 1 to 4, **characterised in that** the main body surrounds the receiving space (28) symmetrically in the cross-section of the nail (10).

6. Nail (10) according to any one of claims 1 to 5, **characterised in that** the rear part (24) has a projection (32) or circumferential collar (54), which is inserted into an opening (30) of the front part (22) forming the receiving space (28), or vice versa.

7. Nail (10) according to any one of claims 1 to 6, **characterised in that** the connection between the rear part (24) and the front part (22) has an anti-twist lock.

8. Nail (10) according to any one of claims 1 to 7, **characterised in that** the front part (22) and the rear part (24) are bonded or welded to one another.

9. Nail (10) according to any one of claims 1 to 8, **characterised in that** the receiving space (28) is filled with a filling material (52).

10. Nail strips having a plurality of nails (10) connected to one another according to any one of claims 1 to 9.

11. Method for manufacturing a nail (10) having the following steps:
- Providing an RFID transponder (34),
- Providing a front part (22) and a rear part (24) of a main body, which has a receiving space (28), wherein the front part (22) has a nail tip (16) and/or the rear part (24) has a drive-in surface (14) arranged transverse to a longitudinal axis (12) of the nail (10),
- Inserting the RFID transponder (34) into the receiving space (28),
- Connecting the front part (22) and rear part (24) such that the RFID transponder (34) is arranged in the receiving space (28) and the receiving space (28) is surrounded by the front part (22) and the rear part (24), and the front part (22) and rear part (24) adjoin one another on a partition surface (26), wherein the partition surface (26) is arranged at a longitudinal position in the front three quarters of the nail (10).

## Revendications

1. Clou (10) destiné à être utilisé avec une outil de clouage et comportant ce qui suit :
- un transpondeur RFID (34),
- un corps de base avec un espace récepteur (28) dans lequel est agencé le transpondeur RFID (34),
- le corps de base étant constitué de plusieurs parties et présentant une partie avant (22) et une partie arrière (24) qui entourent ensemble l'espace récepteur (28), qui sont reliées entre elles et qui sont adjacentes au niveau d'une surface de séparation (26),
- la partie avant (22) présentant une pointe de clou (16) et/ou la partie arrière (24) présentant une surface de clouage (14) agencée transversalement par rapport à un axe longitudinal (12) du clou (10),
**caractérisé en ce que**
- la surface de séparation (26) est agencée en une position longitudinale dans les trois quarts avant du clou (10).

2. Clou (10) selon la revendication 1, **caractérisé en ce que** la partie arrière (24) présente au niveau de son extrémité postérieure une épaisseur de matériau d'au moins 2 mm, vue dans la direction d'un axe longitudinal (12) du clou (10).

3. Clou (10) selon la revendication 1 ou la revendication 2, **caractérisé en ce que** la surface de séparation (26) passe au moins partiellement transversalement par rapport à un axe longitudinal (12) du clou (10).

4. Clou (10) selon l'une des revendications 1 à 3, **caractérisé en ce que** la partie arrière (24) se raccorde à fleur, dans la section de la surface de séparation (26), avec la partie avant (22) ou reste derrière sa section transversale.

5. Clou (10) selon l'une des revendications 1 à 4, **caractérisé en ce que** le corps de base entoure symétriquement l'espace récepteur (28) dans la section transversale du clou (10).

6. Clou (10) selon l'une des revendications 1 à 5, **caractérisé en ce que** la partie arrière (24) présente une saillie (32) ou un collerette périphérique (54) qui est insérée dans une ouverture (30) de la partie avant (22) formant l'espace récepteur (28), ou inversement.

7. Clou (10) selon l'une des revendications 1 à 6, **caractérisé en ce que** le raccordement entre la partie arrière (24) et la partie avant (22) présente un dispositif anti-rotation.

8. Clou (10) selon l'une des revendications 1 à 7, **caractérisé en ce que** la partie avant (22) et la partie arrière (24) sont collées ou soudées entre elles.

9. Clou (10) selon l'une des revendications 1 à 8, **caractérisé en ce que** l'espace récepteur (28) est rempli avec un matériau de remplissage (52).

10. Bandes de clous avec une pluralité de clous (10) reliés entre eux selon l'une des revendications 1 à 9.

11. Procédé de fabrication d'un clou (10) comportant les étapes suivantes :
- mise à disposition d'un transpondeur RFID (34),
- mise à disposition d'une partie avant (22) et d'une partie arrière (24) d'un corps de base présentant un espace récepteur (28), la partie avant (22) présentant une pointe de clou (16) et/ou la partie arrière (24) présentant une surface de clouage (14) agencée transversalement par rapport à un axe longitudinal (12) du clou (10),
- insertion du transpondeur RFID (34) dans l'espace récepteur (28),
- raccordement de la partie avant (22) et de la partie arrière (24) de manière à ce que le transpondeur RFID (34) soit agencé dans l'espace récepteur (28) et que l'espace récepteur (28) soit entouré par la partie avant (22) et la partie arrière (24) et que la partie avant (22) et la partie arrière (24) soient adjacentes au niveau d'une surface de séparation (26), la surface de séparation (26) étant agencée en une position longitudinale dans les trois quarts avant du clou (10).
